# FASCICULE DE BREVET EUROPEEN

(11) **EP 1 216 798 B1**
(45) Date de publication et mention de la délivrance du brevet: **21.09.2005**
(21) Numéro de dépôt: 01403293.2
(22) Date de dépôt: 19.12.2001
(51) Int. Cl.: B25J 15/00

(54) **Dispositif de préhension modulaire destiné à être monté sur un bras de robot**
Auf einem Roboterarm montierbare modulare Greifvorrichtung
Modular gripping structure which can be mounted on a robot arm

(30) Priorité: 20.12.2000 FR 0016690
(43) Date de publication de la demande: 26.06.2002
(73) Titulaire: Genus Technologies, 92320 Châtillon (FR)
(72) Inventeur: Morel, Michel, 95120 Ermont (FR); Roudier, Fabrice, 78820 Juziers (FR)
(74) Mandataire: Kaspar, Jean-Georges

(56) Documents cités:
- EP-A- 1 020 259
- DE-U- 29 622 169
- FR-A- 2 427 883
- FR-A- 2 796 875
- US-A- 4 650 234
- PATENT ABSTRACTS OF JAPAN vol. 016, no. 534 (M-1334), 4 novembre 1992 (1992-11-04) -& JP 04 201095 A (MITSUBISHI ELECTRIC CORP), 22 juillet 1992 (1992-07-22)

## Description

L'invention est relative à un dispositif de préhension destiné à être monté sur un bras de robot, notamment pour saisir et positionner une pièce de carrosserie automobile.

On connaît des dispositifs de préhension, notamment des dispositifs fabriqués et commercialisés par la société M.F.G. de droit français, qui présentent une structure réalisée par assemblage tridimensionnel d'éléments individuels raccordés par des brides de fixation.

On connaît également des dispositifs de préhension comportant une partie centrale tubulaire sur laquelle sont montés des colliers coulissants réglables.

Dans ces deux types de dispositifs connus, les bras montés sur la structure centrale ne sont pas positionnés avec la précision souhaitée et présentent les inconvénients d'une inertie insuffisante conduisant à une flexion excessive des extrémités, et d'une rigidité insuffisante.

Le document EP 1.020.259 A1 décrit un dispositif de préhension selon le préambule de la revendication 1 principale, qui comporte des trous percés le long d'une poutre centrale et dans des colliers de serrage.

Ce dispositif ne permet pas d'obtenir simultanément une bonne précision longitudinale et angulaire des bras destinés à la prise d'une pièce de carrosserie automobile.

L'invention a pour but de remédier aux inconvénients précités, en proposant un nouveau dispositif de préhension comportant des éléments modulaires, pouvant être assemblés avec une bonne précision, de sorte que l'assemblage réalisé présente une bonne rigidité et une tenue dans le temps satisfaisante.

L'invention a pour objet un dispositif de préhension, destiné à être monté sur un bras de robot, comportant une poutre centrale présentant de bonnes caractéristiques d'inertie en flexion et en torsion, et au moins un bras solidarisé à la poutre de manière détachable et destiné à supporter un organe de positionnement, de maintien ou de serrage d'une pièce de carrosserie automobile, la poutre centrale étant creuse, de manière à alléger la poutre centrale tout en conservant de bonnes caractéristiques d'inertie en flexion et en torsion, caractérisé, en combinaison, par le fait que ladite poutre centrale comporte une première conformation prédéterminée d'indexation et que chaque bras comporte une deuxième conformation d'indexation, des moyens de fixation à la poutre centrale étant prévus pour relier rigidement chaque bras à la poutre centrale, tout en appliquant chaque dite deuxième conformation de bras sur une première conformation prédéterminée d'indexation de poutre centrale, de manière à réaliser un positionnement relatif précis de chaque bras sur la poutre centrale, et en ce que la poutre centrale et chaque bras sont assemblés par application de deux dièdres rectangulaires formés respectivement sur la poutre centrale et ledit bras et indexés l'un par rapport à l'autre par des conformations d'indexation coopérantes.

Selon d'autres caractéristiques de l'invention :
- les conformations d'indexation comprennent au moins un tenon et au moins une mortaise sensiblement en forme de prisme droit, de préférence sensiblement parallélépipédiques.
- chaque bras comporte à son extrémité opposée à la poutre centrale des moyens de fixation pour fixer un organe de positionnement, de maintien ou de serrage d'une pièce de carrosserie automobile.
- chaque bras comporte une section rétrécie permettant la rupture du bras en cas de choc sur un obstacle ou de contrainte mécanique trop importante
- chaque bras est réversible, de manière à limiter le nombre de bras.
- le dispositif comporte au moins une nourrice pneumatique comportant une pluralité de conduites tubulaires alimentées par un distributeur, solidarisée de préférence à la poutre centrale.

L'invention sera mieux comprise grâce à la description qui va suivre donnée à titre d'exemple non limitatif en référence aux dessins annexés dans lesquels :
- La figure 1 représente un diagramme explicatif avec vue en coupe de la poutre centrale de dispositif selon l'invention et des bras modulaires détachables de dispositif selon l'invention.
- La figure 2 représente schématiquement un premier mode de réalisation de dispositif selon l'invention comportant une poutre centrale et deux bras assemblés.
- La figure 3 représente schématiquement une vue partielle en perspective d'un mode de réalisation de dispositif selon l'invention analogue au mode de réalisation de la figure 12.
- Les figures 4 à 9 représentent schématiquement des accessoires de montage intermédiaires de dispositif selon l'invention.
- La figure 10 représente schématiquement une vue de dessus d'un deuxième mode de réalisation de dispositif selon l'invention.
- La figure 11 représente schématiquement une vue en élévation d'un troisième mode de réalisation de dispositif de préhension selon l'invention.
- La figure 12 représente schématiquement un quatrième mode de réalisation selon l'invention en perspective avec section d'un bras détachable.

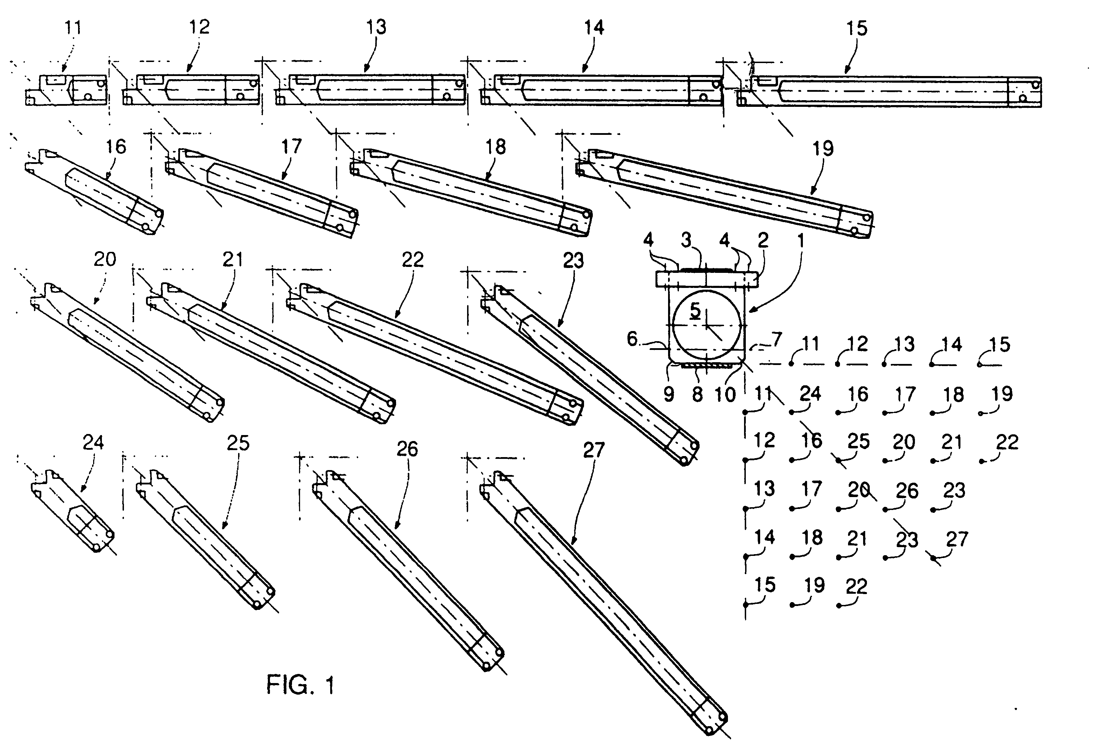

En référence à la figure 1, un dispositif selon l'invention comporte une poutre creuse 1 vue en section transversale et solidaire d'une bride 2 de fixation à l'extrémité d'un bras de robot non représenté.

La bride 2 comporte de manière connue en soi un plateau 3 de centrage sur l'extrémité de bras du robot non représenté et au moins six taraudages 4 de fixation usinés dans la bride 2 de fixation.

La bride 2 est de préférence solidarisée à la poutre 1 par vissage après positionnement par rapport à la poutre 1 au moyen de goupilles de centrage.

La poutre 1 présente de préférence une section sensiblement carrée ou d'inertie en torsion équivalente à une section en carré et présente un évidement intérieur 5 pour diminuer la masse de la poutre.

L'évidement 5 est par exemple de section circulaire, mais peut également sans sortir du cadre de l'invention présenter toute autre section : ovale, elliptique, etc..., ne réduisant pas de plus de 20 % l'inertie en torsion et en flexion de la poutre 1.

Un autre avantage de l'évidement 5 est de permettre le passage de conduites électriques ou de canalisations pneumatiques ou hydrauliques de puissance ou de transfert de signaux de commande ou de position : ce passage s'effectue de manière sûre, car les conduites ou canalisations sont entourées et protégées par les parois de la poutre. En outre cette disposition permet de réduire l'encombrement extérieur du dispositif selon l'invention.

La poutre 1 comporte sur ses faces latérales des taraudages 6, 7 réalisés à intervalles réguliers et schématisés par des traits d'axes, ainsi que des usinages de centrage 8 disposés sur la face opposée à la bride 2. Des chanfreins d'angle 9 et 10 sont prévus pour permettre l'application des bras sur une face latérale portant les taraudages 6 ou 7 et sur la face portant les usinages de centrage.

Le dispositif selon l'invention est conçu pour associer à la poutre centrale 1 des bras modulaires permettant d'atteindre des portées variables choisies dans un maillage régulier.

Le dispositif selon l'invention est conçu pour minimiser le nombre de bras nécessaires pour atteindre une zone spatiale très étendue autour de la poutre 1.

Dans la variante avantageuse représentée, l'invention permet d'utiliser uniquement dix-sept modèles de bras différents dont la portée correspond au point du maillage représenté à l'angle inférieur droit de la poutre 1. Ainsi, chaque bras 11 à 27 permet d'atteindre les points repérés 11 à 27 dans le maillage, moyennant éventuellement un retournement du bras pour atteindre les points inférieurs du maillage.

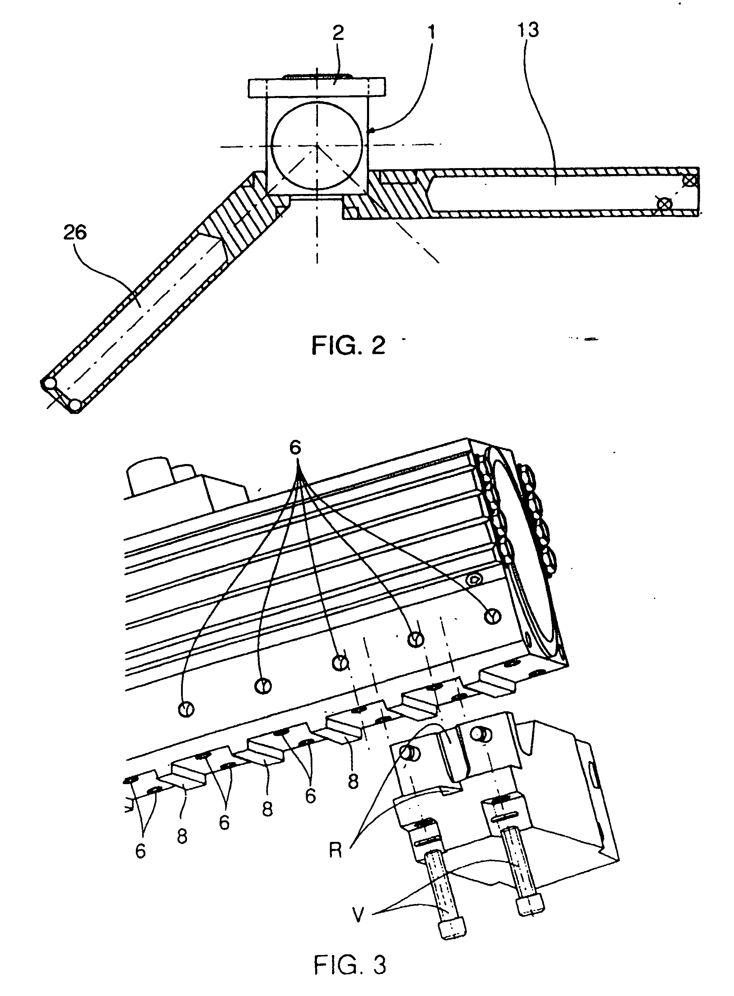

En référence à la figure 2, les éléments identiques ou fonctionnellement équivalents aux éléments de la figure 1 sont repérés par des chiffres de référence identiques aux chiffres de la figure 1.

Le dispositif de la figure 2 comporte une bride 2 de positionnement et d'amarrage à une extrémité de robot non représentée, solidarisée à une poutre 1. Des bras, par exemple un bras 13 et un bras 26 sont fixés par positionnement et vissage à la poutre 1, de manière à former un ensemble rigide lors des déplacements du robot. De préférence, chaque bras 11 à 27 est évidé, de manière à diminuer sa masse et de manière à réduire l'inertie appliquée à l'extrémité du robot lors de ses déplacements.

En référence à la figure 3, la poutre 1 comporte des taraudages 6 régulièrement espacés et des lardons 8 de centrage sensiblement parallélépipédiques, usinés sur la face inférieure sensiblement sur le plan médian de deux taraudages 6 consécutifs.

Les extrémités des bras 11 à 27 sont usinés selon des formes coopérantes, c'est-à-dire présentent chacun au moins une rainure centrale I d'indexage sur un lardon 8 de poutre1.

Chaque rainure centrale I d'indexage est disposée entre deux trous de passage pour des vis V de fixation destinées à être vissées dans des taraudages 6. Chaque rainure centrale I d'indexage est disposée entre deux trous de passage de vis sur un plan d'un dièdre rectangulaire usiné à l' extrémité d'un bras 11 à 27.

Cette disposition assure la réversibilité des bras 11 à 27 et permet d'atteindre avec un nombre de bras réduit à 17 tout l'espace environnant la poutre 1.

Des poutres 1 de différentes longueurs peuvent être prévues, de préférence de longueurs comprises entre 500 mm et 3 m.

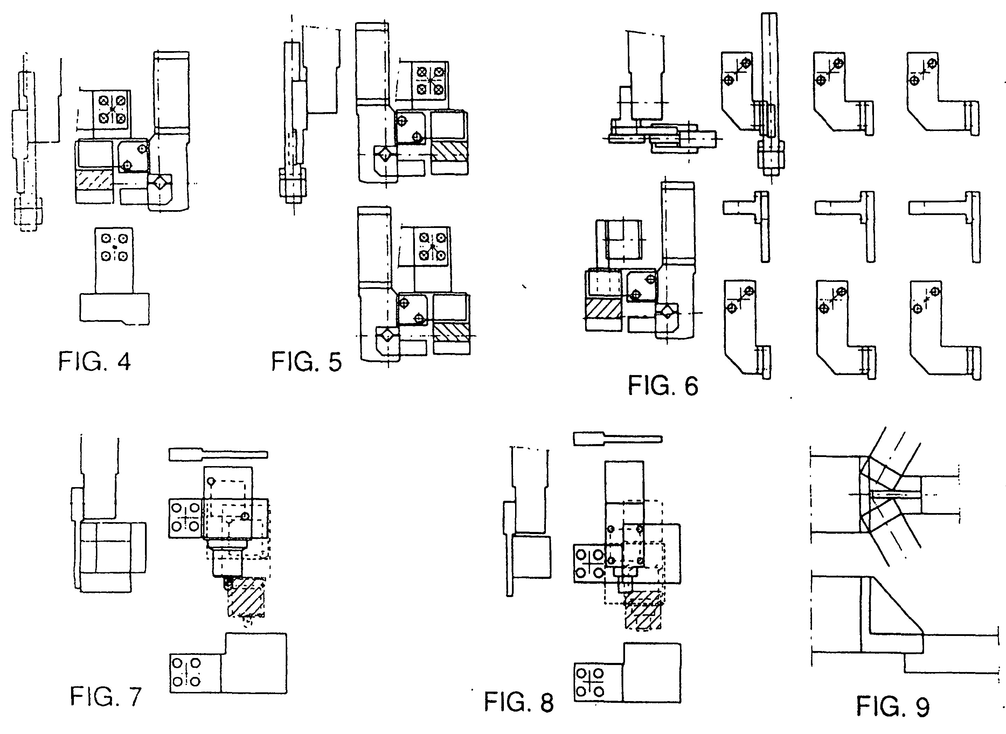

En référence aux figures 4 à 9, le dispositif selon l'invention comporte de préférence des accessoires de montage pour monter différents accessoires d'appareils de type connu en soi au bout des bras du dispositif.
- La figure 4 représente un accessoire de montage d'un serrage de type CNOMO taille 0 orienté vers l'intérieur.
- La figure 5 représente un accessoire de montage d'un serrage CNOMO taille 0 orienté vers l'extérieur.

La figure 6 représente un accessoire de montage d'un serrage CNOMO taille 4 parallèle à la poutre associant éventuellement à une équerre une ou plusieurs cales d'épaisseur destinées à fixer la position du serrage.

La figure 7 représente un accessoire de montage de mécanisme multifonctions combinant deux plaques de fixation à une cale de forte épaisseur.

La figure 8 représente schématiquement un accessoire de montage de pilote combinant deux plaques de fixation à une cale d'épaisseur.

La figure 9 représente schématiquement un accessoire de montage d'un bras en bout de poutre.

D'autres accessoires peuvent avantageusement être prévus, notamment au niveau de la liaison de la poutre et d'un bras, de manière à atteindre les sommets d'un maillage décalé en translation par rapport au maillage décrit à la figure 1. Avantageusement, un tel accessoire peut présenter une forme d'équerre dont l'épaisseur est égale à la moitié de la distance entre points du maillage représenté à la figure 1, de manière à atteindre les sommets d'un autre maillage défini par les points d'intersection des diagonales du maillage de la figure 1.

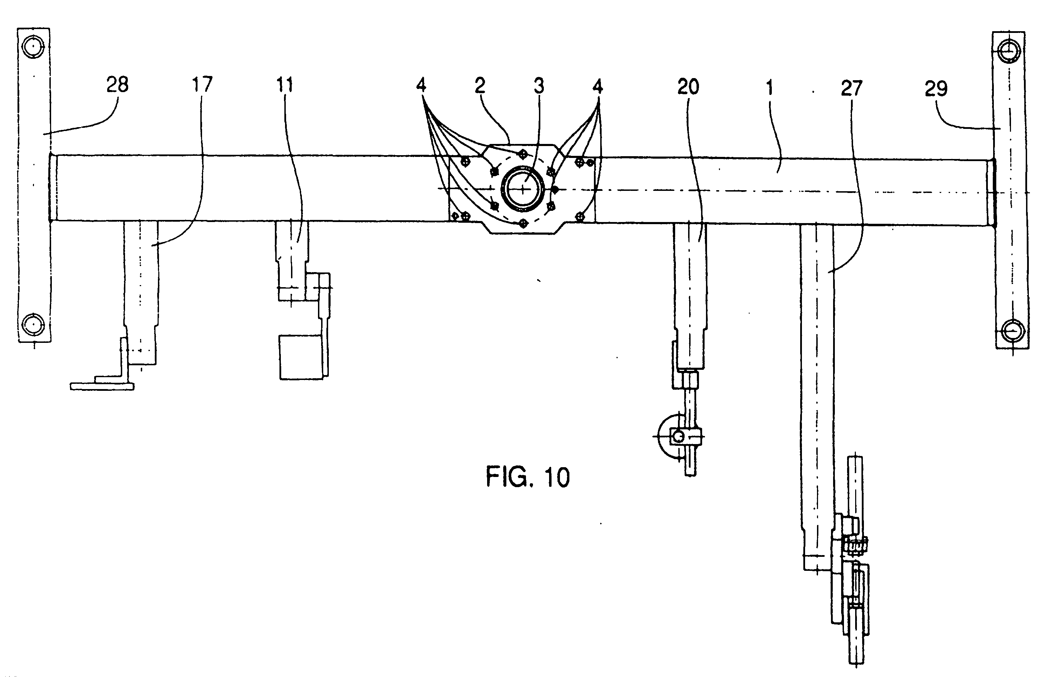

En référence à la figure 10, un deuxième mode de réalisation de dispositif selon l'invention comporte une poutre 1 solidarisée à la bride 2 de fixation à l'extrémité d'un bras de robot non représenté.

La poutre 1 porte des bras 17, 11, 20 et 27 et deux traverses d'extrémité 28 et 29 destinées par exemple à recentrer le dispositif de préhension sur un outillage fixe.

Les bras 11, 17, 20, 27 portent chacun un accessoire de montage d'un appareil de serrage, de positionnement ou de maintien d'un élément de carrosserie non représenté.

En raison du nombre limité d'interfaces mécaniques de connexion, et de la rigidité de la structure en arête de poisson du dispositif selon l'invention, ainsi que de la faible inertie du dispositif selon l'invention, le positionnement des différents appareils montés sur le dispositif selon l'invention est précis et invariable lors des déplacements du bras du robot destiné à porter le dispositif selon l'invention. En outre, le remplacement des différents appareils montés sur le dispositif selon l'invention s'effectue également en conservant un positionnement précis et invariable

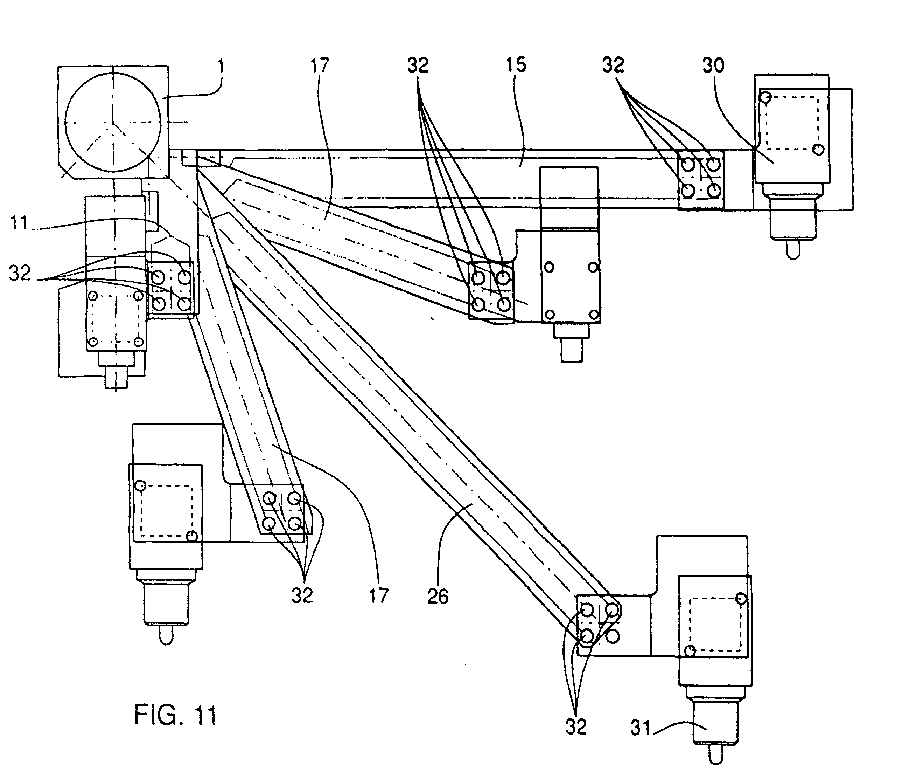

En référence à la figure 11, un autre mode de réalisation d'un dispositif selon l'invention comporte des bras 15, 17, 26, 17, et 11 similaires ou fonctionnellement équivalents aux bras décrits en référence à la figure 1, ces bras étant solidarisés à une poutre 1 de la manière décrite ci-dessus.

Le même appareil de positionnement 30 est fixé à l'extrémité de chaque bras, de manière à illustrer les différentes possibilités de montage en utilisant un même accessoire de montage 31 au bout de chaque bras.

Chaque organe 31 est monté sur son bras associé par des vis coopérant avec des taraudages 32 pratiqués dans le bras correspondant. Les taraudages 32 pratiqués dans chaque bras représenté sont usinés de manière à définir un carré géométrique parallèle au carré de la section de la poutre 1. Il en résulte que le montage d'un dispositif selon l'invention aboutit à définir avec précision le point d'intersection des diagonales de chaque carré correspondant aux taraudages 32. Ce point d'intersection correspond à chaque fois à un des sommets du maillage décrit en référence à la figure 1.

Des mesures ont montré que le dispositif selon l'invention permet d'obtenir une rigidité très supérieure au dispositif de préhension de l'art antérieur et un positionnement géométrique invariant de précision meilleure que celle des dispositifs de l'art antérieur.

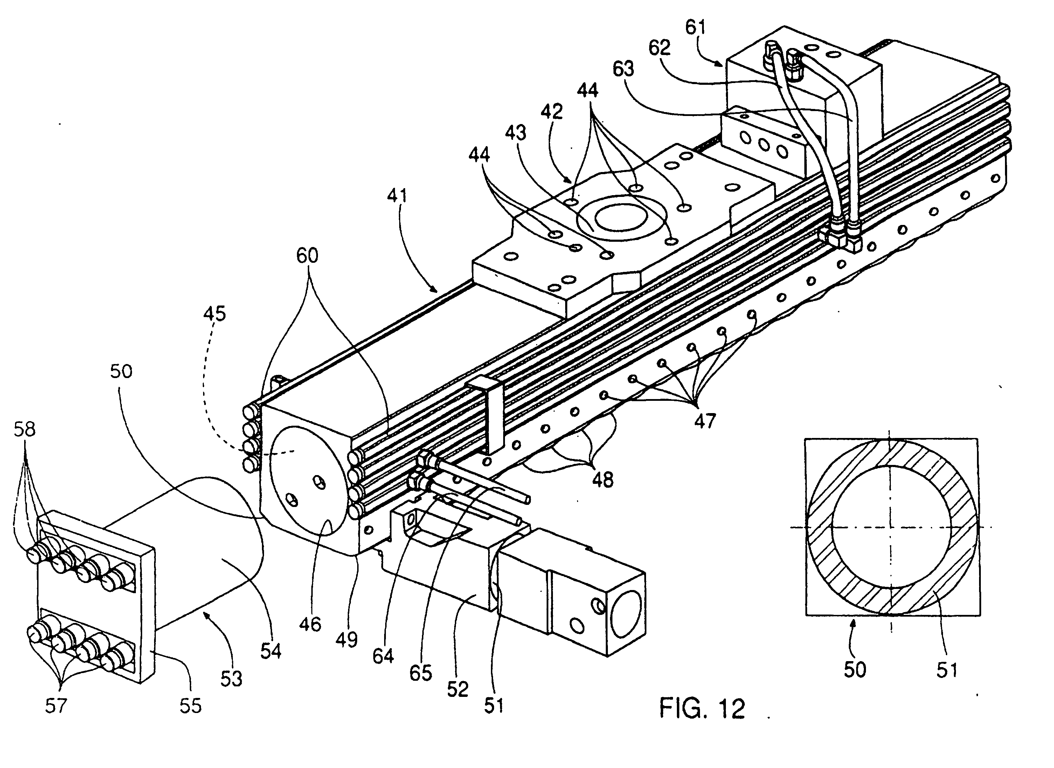

En référence à la figure 12, un mode préféré de réalisation du dispositif selon l'invention comporte une poutre 41 creuse vue en perspective. La poutre creuse 41 est solidaire d'une bride 42 de fixation à l'extrémité d'un bras de robot non représenté. La bride 42 comporte de manière connue en soi un plateau 43 de centrage sur le bras du robot non représenté et au moins six taraudages 44 de fixation usinés dans la bride 42 de fixation. La bride 42 est de préférence solidarisée à la poutre 41 par vissage après positionnement par rapport à la poutre 41 au moyen de goupilles de centrage.

La poutre 41 présente une section sensiblement carrée et présente un évidement intérieur 45 pouvant être obturé par un couvercle amovible 46. La poutre 41 comporte sur ses faces latérales des taraudages tels que 47 réalisés à intervalle régulier ainsi que des usinages de centrage 48 disposés sur la face opposée à la bride 42. Des chanfreins d'angle 49 et 50 sont prévus pour permettre l'application des bras sur une face latérale portant des taraudages 47 et sur la face portant les usinages 48 de centrage.

Un bras 50 est ainsi monté au moyen de vis appropriées vissées dans les taraudages 47 ; le bras 50 est positionné sur les usinages de centrage 48, de préférence en forme de lardon sensiblement parallélépipédique.

Le bras 50 est, dans l'exemple représenté, un bras horizontal qui comporte de préférence une section rétrécie 51 vue en coupe.

Cette section rétrécie 51 vue en coupe permet la rupture du bras en cas de choc sur un obstacle ou de contrainte mécanique trop importante : cette section rétrécie 51 a ainsi une fonction de "fusible mécanique", qui permet, au prix simplement de la rupture du bras 50, de ne pas endommager la totalité du dispositif selon l'invention.

Le bras 50 est creux et la section résistante de la partie 51 rétrécie est choisie de manière prédéterminée en fonction de l'effort résistant à supporter par l'extrémité du bras 50 et en fonction de la limite de rupture choisie pour la protection du dispositif selon l'invention.

De manière avantageuse, on prévoit que l'évidement intérieur 45 de la poutre creuse 41 puisse être accessible après enlèvement du couvercle 46, afin de recevoir un boîtier répartiteur 53 présentant une partie cylindrique 54 et une partie d'extrémité 55 conformée en bornier portant une pluralité de prises 57 et 58.

Cette disposition permet ainsi de minimiser la longueur des enchevêtrements des câbles électriques d'alimentation des serrages électriques pouvant être disposés aux extrémités des bras du dispositif.

Dans le cas d'un serrage pneumatique, on prévoit avantageusement de monter sur la poutre 41 une ou deux nourrices pneumatiques 60 comportant une pluralité de conduites tubulaires alimentées par un distributeur 61 au moyen de tuyauteries souples 62, 63. La nourrice 60 est ainsi alimentée sous pression et permet de distribuer l'air comprimé à des serrages pneumatiques ainsi que d'évacuer l'air refoulé directement par la nourrice 60, en évitant un enchevêtrement de conduits pneumatiques.

Sur l'exemple représenté, la nourrice 60 est prévue pour alimenter deux piquages 64 et 65 destinés à alimenter le vérin pneumatique d'un serrage non représenté ou d'un appareil de positionnement, ou de maintien équivalent d'une pièce de carrosserie automobile.

L'invention décrite en référence à plusieurs modes de réalisation n'y est nullement limitée, mais couvre au contraire toute modification de forme et toute variante de réalisation dans le cadre et l'esprit de l'invention.

Ainsi, dans le cas d'un serrage pneumatique, on peut avantageusement monter une ou deux nourrices pneumatiques 60 comportant une pluralité de conduites tubulaires alimentées par un distributeur 61 au moyen de tuyauteries souples 62, 63 dans l'intérieur creux d'une poutre 41. La nourrice 60 alimentée sous pression permet également dans cette variante de distribuer l'air comprimé à des serrages pneumatiques, en évitant un enchevêtrement de conduits pneumatiques.

L'essentiel est que la structure du dispositif selon l'invention comporte une poutre allongée présentant une bonne inertie en torsion et en flexion équivalente à celle obtenue en utilisant une poutre à section carrée, et que le mode de fixation retenu permette d'atteindre un volume spatial important avec un nombre faible de bras, de manière à réduire les stocks de bras nécessaires pour la mise en oeuvre de l'invention.

## Revendications

1. Dispositif de préhension, destiné à être monté sur un bras de robot, comportant une poutre centrale (1) présentant de bonnes caractéristiques d'inertie en flexion et en torsion, et au moins un bras (11-27) solidarisé à la poutre de manière détachable et destiné à supporter un organe de positionnement, de maintien ou de serrage d'une pièce de carrosserie automobile, la poutre centrale étant creuse, de manière à alléger la poutre centrale (1) tout en conservant de bonnes caractéristiques d'inertie en flexion et en torsion, **caractérisé**, en combinaison, par le fait que ladite poutre centrale (1) comporte une première conformation prédéterminée d'indexation et que chaque bras (11-27) comporte une deuxième conformation d'indexation, des moyens de fixation à la poutre centrale (1) étant prévus pour relier rigidement chaque bras (11-27) à la poutre centrale (1), tout en appliquant chaque dite deuxième conformation de bras (11-27) sur une première conformation prédéterminée d'indexation de poutre centrale (1), de manière à réaliser un positionnement relatif précis de chaque bras (11-27) sur la poutre centrale (1), et en ce que la poutre centrale (1) et chaque bras (17-27) sont assemblés par application de deux dièdres rectangulaires formés respectivement sur la poutre centrale (1) et ledit bras et indexés l'un par rapport à l'autre par des conformations d'indexation (8) coopérantes.

2. Dispositif selon la revendication 1, **caractérisé en ce que** les conformations d'indexation (8) comprennent au moins un tenon et au moins une mortaise sensiblement en forme de prisme droit, de préférence sensiblement parallélépipédiques.

3. Dispositif selon l'une quelconque des revendications précédentes, **caractérisé en ce que** chaque bras (17-27) comporte à son extrémité opposée à la poutre centrale (1) des moyens de fixation pour fixer un organe de positionnement, de maintien ou de serrage d'une pièce de carrosserie automobile.

4. Dispositif selon la revendication 3, **caractérisé en ce que** chaque bras comporte une section rétrécie (51) permettant la rupture du bras en cas de choc sur un obstacle ou de contrainte mécanique trop importante

5. Dispositif selon l'une quelconque des revendications précédentes, **caractérisé en ce que** chaque bras (17-27) est réversible, de manière à limiter le nombre de bras.

6. Dispositif selon l'une quelconque des revendications précédentes, **caractérisé en ce que** le dispositif comporte au moins une nourrice pneumatique (60) comportant une pluralité de conduites tubulaires alimentées par un distributeur (61), solidarisée de préférence à la poutre centrale (1).

## Patentansprüche

1. Haltevorrichtung zum Befestigen an einem Roboterarm aus einem zentralen Balken (1) mit guten Eigenschaften hinsichtlich des Biege- und Torsionswiderstandsmoments und wenigstens einem daran lösbar angeordneten Arm (11 - 27) zum Halten einer Vorrichtung zum Positionieren, Halten oder Festklemmen eines Fahrzeugkarosserieteils, bei der der zentrale Balken (1) hohl ist, um sein Gewicht zu vermindern, gleichzeitig aber gute Eigenschaften hinsichtlich des Biege- und Torsionswiderstandsmoments beibehält, **dadurch gekennzeichnet, dass** der zentrale Balken (1) in Kombination eine erste vorgegebene Indexierausbildung aufweist und jeder Arm (11 - 27) eine zweite Indexierausbildung aufweist, dass Befestigungsanordnungen zum Befestigen am zentralen Balken (1) vorgesehen sind, um jeden Arm (11 - 27) am zentralen Balken (1) zu befestigen und um jede zweite Indexierausbildung am Arm (11 - 27) mit einer ersten Indexierausbildung am zentralen Balken (1) in Eingriff zu bringen, so dass eine verhältnismäßig genaue Positionierung eines jeden Arms (11 - 27) am zentralen Balken (1) gegeben ist und dass der zentrale Balken (1) und jeder Arm (11 - 27) durch Gegeneinanderfügen von zwei rechtwinkligen Flächenwinkeln an dem zentralen Balken und am jeweiligen Arm, die gegeneinander durch zusammenwirkende Indexierausbildungen (8) ausgerichtet sind, zusammengefügt sind.

2. Vorrichtung nach Anspruch 1, **dadurch gekennzeichnet, dass** die Indexierausbildungen (8) wenigstens einen Zentrierzapfen und wenigstens eine Aussparung im Wesentlichen in Form eines geraden Prismas, vorzugsweise im Wesentlichen als Parallelepiped ausgebildet, aufweisen.

3. Vorrichtung nach einem der vorhergehenden Ansprüche, **dadurch gekennzeichnet, dass** jeder Arm (11 bis 27) an seinem dem zentralen Balken (1) entgegengesetzten Ende Befestigungselemente zum Befestigen einer Vorrichtung zum Positionieren, Halten oder Festklemmen eines Fahrzeugkarosserieteils aufweist.

4. Vorrichtung nach Anspruch 3, **dadurch gekennzeichnet, dass** jeder Arm einen eingezogenen Bereich (51) aufweist, an dem der Arm im Fall eines Stoßes an einem Hindernis oder einer zu großen mechanischen Belastung bricht.

5. Vorrichtung nach einem der vorhergehenden Ansprüche, **dadurch gekennzeichnet, dass** jeder Arm (11 - 27) zur Verminderung der Anzahl der Arme umkehrbar ist.

6. Vorrichtung nach einem der vorhergehenden Ansprüche, **dadurch gekennzeichnet, dass** sie wenigstens eine pneumatische Versorgungseinheit (60) aus einer Mehrzahl von rohrförmigen Leitungen, die mit einem Verteiler (61) in Verbindung stehen, aufweist, und die pneumatische Versorgungseinheit (60) vorzugsweise am zentralen Balken (1) befestigt ist.

## Claims

1. Holding device, designed to be mounted on the arm of a robot, comprising a central beam (1) with good flexion and torsion inertia characteristics, and at least one arm (11-27) integral with the beam in a detachable manner and designed to support a positioning, holding or clamping part for an automobile bodywork part, the central beam being hollow, in order to lighten the central beam (1) whilst still keeping the good flexion and torsion inertia characteristics, **characterised, in** combination, by the fact that the said central beam (1) comprises a first predetermined indexing structure and by the fact that each arm (11-27) comprises a second indexing structure, fixing means to the central beam (1) being provided to connect each arm (11-27) rigidly to the central beam (1), whilst applying each said second arm structure (11-27) onto a first predetermined indexing structure of the central beam (1), in order to bring about relatively accurate positioning of each arm (11-27) on the central beam, and by the fact that the central beam (1) and each arm (17-27) are assembled by applying two rectangular dihedrals, formed respectively on the central beam (1) and the said arm and indexed in relation to one another by co-operating indexing structures (8).

2. Device according to claim 1, **characterised by** the fact that the indexing structures (8) comprise at least one tenon and at least one mortise roughly in the form of an upright prism, preferably roughly parallelepipedic.

3. Device according to either of the previous claims, **characterised by** the fact that each arm (17-27) comprises at its extremity, which is opposite the central beam (1), fixing means to fix a positioning, holding or clamping part for an automobile bodywork part.

4. Device according to claim 3, **characterised by** the fact that each arm comprises a contracted section (51) allowing the arm to rupture in the event of a shock against an obstacle or mechanical strain which is too great.

5. Device according to any of the previous claims, **characterised by** the fact that each arm (17-27) is reversible in order to limit the number of arms.

6. Device according to any of the previous claims, **characterised by** the fact that the device comprises at least one pneumatic feed-tank (60) comprising a plurality of tubular pipes supplied by a distributor (61), preferably integral with the central beam (1).
